# FASCICULE DE BREVET EUROPEEN

(11) **EP 3 081 461 B1**
(45) Date de publication et mention de la délivrance du brevet: **28.11.2018**
(21) Numéro de dépôt: 16165053.6
(22) Date de dépôt: 13.04.2016
(51) Int. Cl.: B62D 35/00

(54) **ELÉMENT DE CARROSSERIE À L'ARRIÈRE D'UN VÉHICULE AUTOMOBILE AVEC UNE PEAU EXTERNE EXTENSIBLE ET UN POUSSOIR INTERNE RIGIDE**
KAROSSERIEELEMENT AM HECK EINES KRAFTFAHRZEUGS MIT EINER DEHNBAREN AUSSENHAUT UND EINEM STARREN INTERNEN DRUCKKNOPF
BODYWORK ELEMENT AT THE REAR OF A MOTOR VEHICLE WITH AN EXTENSIBLE OUTER SKIN AND A RIGID INNER TAPPET

(30) Priorité: 17.04.2015 FR 1553448
(43) Date de publication de la demande: 19.10.2016
(73) Titulaire: COMPAGNIE PLASTIC OMNIUM, 69007 Lyon (FR)
(72) Inventeur: ANDRE, Gérald, 01500 AMBERIEU EN BUGEY (FR); CHERON, Hugues, 01800 MEXIMIEUX (FR)
(74) Mandataire: Remy, Vincent Noel Paul

(56) Documents cités:
- US-A1- 2004 130 182
- US-A1- 2005 248 184

## Description

La présente invention concerne la fabrication d'une pièce de carrosserie extensible et active à l'arrière d'un véhicule automobile.

De façon générale, un travail d'optimisation de l'aérodynamique arrière sur les parties latérales arrière d'un véhicule automobile de dernière génération se fait par des éléments de carrosserie permettant de repousser les flux d'air sur les côtés et vers l'arrière du véhicule. Ces éléments de carrosserie sont généralement des pièces de carrosserie ajoutées à l'extérieur d'un véhicule, notamment de type break et monospace, haut et relativement droit à l'arrière, sur les montants de hayon ou en zone latérale du vitrage arrière par vissage ou adhésivage. Ces éléments sont aussi souvent désignés « déflecteur » ou « spoiler » par les spécialistes du domaine technique, en présentant une forme aérodynamique fixe, rigide ou inactive.

Les déflecteurs ou spoilers de ce genre s'accompagnent souvent de problèmes d'encombrement, de fragilité, ou d'agressivité envers les usagers dans leur utilisation à cause de leur forme saillante, fixe et rigide. De plus, des formes aérodynamiques optimales ne peuvent pas être adoptées sur des véhicules de grande série assujettis à l'homologation et parfois sont limités par la contrainte esthétique de ne pas perturber l'équilibre visuel du reste du véhicule.

Pour pallier ces problèmes, une alternative consiste à rendre ces éléments de carrosserie actifs, soit par volonté d'effectuer une correction dynamique, soit par nécessité de protéger ces éléments saillants à basse vitesse comme sur le véhicule prototype connu sous le nom de "Eolab" (marque déposée) de "Renault" (marque déposée), ou encore en zone haute comme sur le véhicule prototype connu sous le nom de "Cactus" (marque déposée) Airflow de "Citroën" (marque déposée). Dans ces cas, on rencontre des éléments rigides déployables qui vont être pilotés, généralement en rotation autour d'un axe, par un moteur. Ces éléments déployables sont donc escamotables afin de pouvoir se loger dans la carrosserie à faible vitesse et à l'arrêt. Toutefois, en raison d'une part des volumes disponibles pour les loger, et d'autre part des contraintes liées à la cinématique de rotation ou de translation, la solution de pièce rigide mobile ne permet pas d'adopter la forme optimale qui permet la réduction maximale de trainée du véhicule.

Pour remédier aux inconvénients ci-dessus, une autre alternative consiste à rendre ces éléments de carrosserie souples et aptes à se déformer intégralement à l'aide d'un glissement relatif, d'un bord de l'élément de carrosserie de la pièce par rapport aux pièces environnantes, afin d'atteindre une forme aérodynamique optimale. Cette configuration demande un déplacement, donc un jeu de carrosserie et un jeu aérodynamique non constants entre l'élément de carrosserie et son environnement. Ceci peut induire des coincements ou des usures dans les parties de contact de la pièce souple sur ses fixations.

Le document US 2004/130182 A1, qui divulgue le préambule de la revendication 1, décrit un élément de carrosserie d'un véhicule automobile comprenant une peau externe flexible et au moins un élément de réglage mécaniquement mobile, situé derrière cette peau, et permettant à la peau externe à déformer.

Il existe donc un besoin d'obtenir un élément de carrosserie de véhicule, apte à s'étendre jusqu'à prendre une forme aérodynamique optimale pour le guidage d'air et la réduction maximale de trainée, mais sans risque de coincement ni d'usure.

La présente invention a notamment pour but de remédier aux inconvénients précipités en fournissant un élément de carrosserie d'un véhicule automobile destiné à être placé à l'arrière de ce véhicule, ledit élément comportant une partie visible de l'extérieur du véhicule, ledit élément comprenant une peau externe partiellement ou totalement extensible et un poussoir interne situé derrière cette peau, apte à prendre une première configuration dans laquelle le poussoir interne impose à la peau externe une première conformation et une seconde configuration dans laquelle le poussoir interne impose à la peau externe une seconde conformation, la peau externe étant tendue dans ces deux conformations, de manière à ne jamais présenter aucun pli, caractérisé :
- en ce que la peau externe est en une matière déformable apte à s'étirer d'au moins 100% telle que le TPU, le caoutchouc, le SEBS;
- et en ce que, dans l'une seulement des deux conformations, la peau externe présente une partie en saillie du reste de la carrosserie du véhicule.

Selon l'invention, « derrière la peau » s'entend comme signifiant à la fois « sous cette peau », c'est-à-dire enveloppé par la peau, et « caché par cette peau de manière à ne pas être visible de l'extérieur du véhicule ».

Dans un mode de réalisation particulier de l'invention, la partie de la peau externe en saillie du reste de la carrosserie dans une des configurations est apte à dévier les flux d'air pour réduire la trainée à l'arrière du véhicule.

Dans un autre mode de réalisation, la peau externe réduit la trainée à l'arrière du véhicule dans une première configuration, tout en faisant obstacle à l'ouverture du hayon, tandis qu'elle permet l'ouverture du hayon dans une seconde configuration.

Un tel élément de carrosserie, constitué d'une peau externe souple extensible et d'un poussoir interne rigide, d'une première part permet une grande liberté de forme de la pièce, notamment lorsqu'elle joue un rôle aérodynamique, afin d'atteindre sa forme optimale pour le guidage d'air et la réduction maximale de trainée du véhicule et d'éviter tout problème éventuel de rupture de forme aérodynamique ; d'une deuxième part permet à la peau externe de se rétracter sans pli à faible vitesse et à l'arrêt du véhicule par rapport à sa forme aérodynamique afin d'éviter des formes agressives grâce à une combinaison d'une matière déformable apte à revenir fidèlement à sa forme initiale et d'un poussoir interne rigide ; et enfin solutionne tous les problèmes d'usure ou de pollution qui sont aptes à venir endommager ou bloquer une pièce active rigide ou une pièce souple présentant un jeu de carrosserie ou un jeu aérodynamique non constants, du type amas de boue, glace et neige par exemple. Ainsi, l'élément de carrosserie de l'invention est une pièce visible et esthétique apte à se rétracter de façon à éviter tout risque d'endommagement du fait de son état au repos à l'arrêt du véhicule et de résister aux agressions environnementales extérieures. En outre, la partie rigide permet d'étirer la partie déformable afin de la faire passer d'une forme étendue à une forme rétractée, d'assurer sa fixation au véhicule, de gérer les proximités en jeu et en affleurement avec les pièces environnantes.

On notera que la peau externe est en une matière déformable apte à s'étirer d'au moins 100%, telle que le TPU (Thermoplastique polyuréthane), le caoutchouc, le SEBS (polystyrène-b-poly(éthylène-butylène)-b-polystyrène), et avantageusement de plus 200%. Avantageusement, la matière présente la propriété de revenir à sa forme initiale en conformation rétractée après son étirage et ce, même après plus de 10000 cycles. Grâce à ces propriétés, on obtient un élément de carrosserie aérodynamique actif, souple et apte à passer d'une forme étendue à une forme rétractée, sans déplacement de cet élément par rapport aux autres pièces environnantes.

Dans des modes de réalisation particuliers, le poussoir interne est constitué soit d'une vessie gonflable, soit d'une pièce rigide subissant un déplacement sous l'action d'un moteur ou d'un piston à huile ou à gaz, ou encore d'un alliage à mémoire de forme.

Dans un mode de réalisation de l'invention, la peau externe a subi un traitement lui donnant un aspect visuellement acceptable pour l'industrie automobile et capable de résister aux agressions environnementales extérieures, grâce à ses caractéristiques de matière.

Dans un mode de réalisation de l'invention, l'élément de carrosserie comprend encore un support de fixation à une partie du véhicule, par exemple à la carrosserie fixe ou au caisson de hayon.

Dans un mode de réalisation particulier, l'élément de carrosserie est placé au bord d'une vitre arrière du véhicule, cette vitre étant déplaçable avec un ouvrant arrière du véhicule, l'élément de carrosserie se retrouvant ainsi :
- soit dans le prolongement du toit ;
- soit sur les montants latéraux d'un hayon ;
- soit sur une malle.

Dans un autre mode de réalisation particulier, la peau externe est intégrée à une zone de crosse de pare-chocs arrière. Avantageusement la peau externe est issue de surmoulage ou de comoulage avec une peau de pare-chocs en résine polypropylène.

Dans d'autres variantes, l'élément de carrosserie est situé autour des passages de roues, ou de la partie arrière supérieure du toit, telle que la zone de becquet ou spoiler, ou dans les pare-chocs avant, ou les bas de caisse.

Dans un mode de réalisation de l'invention, l'élément de carrosserie comprend des moyens d'actionnement du poussoir interne déclenchant son passage d'une configuration à l'autre à partir d'une vitesse donnée, fournie par un capteur de vitesse du véhicule, par exemple 80 km/h.

Dans un mode de réalisation selon l'invention, l'élément de carrosserie comprend des moyens d'actionnement du poussoir interne déclenchant son passage d'une configuration à l'autre à partir d'une pression donnée, fournie par un capteur de pression situé à l'arrière du véhicule.

L'invention sera mieux comprise à la lecture des figures annexées, qui sont fournies à titre d'exemples et ne présentent aucun caractère limitatif, dans lesquelles :
- la figure 1 est une vue en coupe de dessus d'un élément de carrosserie selon un mode de réalisation de l'invention,
- la figure 2 est vue en coupe de dessus d'un élément de carrosserie selon un deuxième mode de réalisation de l'invention, et
- la figure 3 est une vue en coupe de dessus d'un élément de carrosserie selon un troisième mode de réalisation de l'invention.

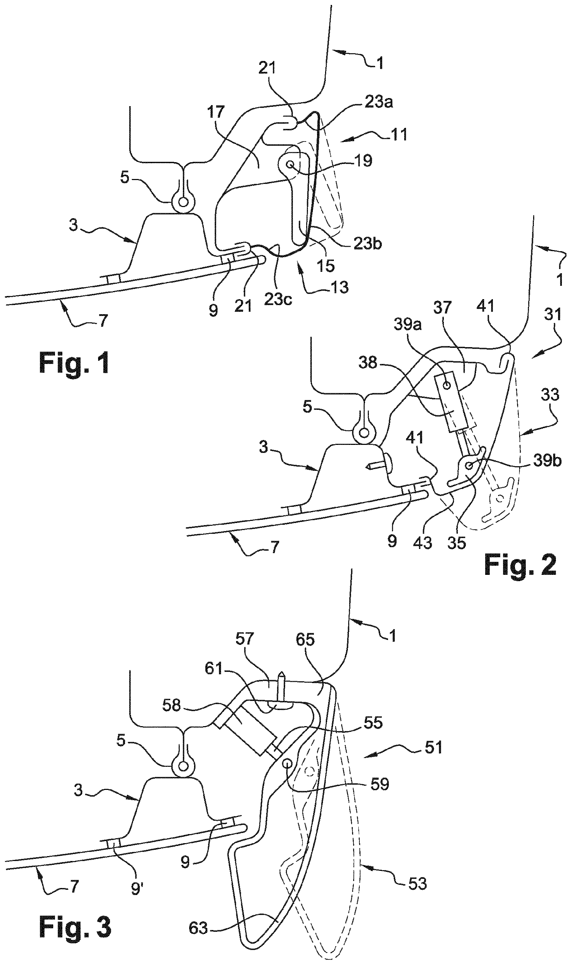

On se réfère maintenant à la figure 1 qui illustre un mode de réalisation particulier d'un élément de carrosserie 11 à l'arrière d'un véhicule automobile comportant une carrosserie fixe 1 et un hayon. Généralement, le hayon est muni d'un caisson 3, qui est lié à la carrosserie fixe 1 par un joint 5, et sur lequel une vitre arrière 7 est fixée par collage par l'intermédiaire d'un joint de colle 9 pour la fixation de la vitre arrière 7 au caisson 3, de façon déplaçable avec ce hayon.

De façon générale, l'élément de carrosserie 11 est constitué d'une peau externe extensible 13, formant sa partie visible, et d'un poussoir interne 15 situé sous cette peau. Dans le mode de réalisation illustré par la figure 1, l'élément de carrosserie 11 comprend encore un support de fixation 17 par lequel il est fixé à une partie du véhicule, ici plus précisément au caisson 3 par une des extrémités du support de fixation 17, mais il pourra aussi être fixé à la carrosserie fixe 1, par exemple. Dans une autre variante, il est fixé par une autre extrémité du support de fixation 17 ou encore une combinaison de ces deux possibilités.

La peau externe 13 recouvre le support de fixation 17 et est fixée à ses extrémités par des attaches de la peau 21 sur le support de fixation, de façon à former une espace interne dans lequel le poussoir interne 15 peut se loger (il est ainsi enveloppé par la peau 21) et se déplacer d'une première position dans laquelle le poussoir interne 15 impose à la peau externe 13 une première conformation dite rétractée (trait continu) à une seconde position dans laquelle le poussoir interne 15 impose à la peau externe 13 une seconde conformation dite étendue (trait interrompu). La conformation rétractée correspond à une forme au repos où l'élément de carrosserie 11 est peu ou pas protubérant par rapport à l'enveloppe du véhicule, c'est-à-dire qu'il ne se trouve pas en saillie du reste de la carrosserie du véhicule, afin de se protéger, alors que la conformation étendue correspond à une forme concave ou convexe ou une combinaison des deux, protubérante de telle façon que l'élément de carrosserie 11 prend une forme aérodynamique optimale lui permettant de dévier les flux d'air et de réduire la trainée à l'arrière du véhicule lorsque ce véhicule roule à une grande vitesse.

Le poussoir interne 15 est monté sur le support de fixation 17 par une liaison pivot et est actionné par un actuateur rotatif (non illustré). Grâce à cette liaison pivot, le poussoir interne 15 peut tourner autour d'un axe de rotation 19 par rapport au support de fixation 17, d'une première position à une seconde position de façon à étirer la peau externe 13. Dans ce cas, le poussoir interne 15 se meut uniquement par rotation autour d'un axe vertical et la peau externe 13 subit uniquement une déformation sans pli. Aucun déplacement de l'élément de carrosserie 11 par rapport au caisson 3 ou à la carrosserie fixe 1 n'apparaît dans ce mode de réalisation. Ceci permet de maintenir un jeu de carrosserie et un jeu aérodynamique constants entre l'élément de carrosserie 11 et son environnement, afin d'éviter des coincements ou des usures dans les zones de contact avec les pièces environnantes.

On notera que la peau externe 13 n'est pas totalement extensible sur sa surface périphérique car elle est renforcée dans ses zones de contact avec le support de fixation 17 ou le poussoir interne 15, autour des attaches de la peau 21 sur le support de fixation par exemple, soit par des renforts rigides rapportés sur l'intérieur de la peau 23a,23b,23c soit par une épaisseur locale plus importante de la peau afin de la rendre localement non déformable. Ceci permet une bonne résistance mécanique dans les zones de contact entre les composants de l'élément de carrosserie 11 et son environnement.

On notera que la peau externe 13 est en une matière déformable apte à s'étirer d'au moins 100% telle que le TPU (Thermoplastique polyuréthane), le caoutchouc, le SEBS, et avantageusement de plus 200%. Avantageusement, la matière présente la propriété de revenir à sa forme initiale en conformation rétractée après son étirage et de maintenir cette propriété de retour élastique même après plus de 10000 cycles.

On notera que le poussoir interne 15 peut aussi être constitué d'une vessie gonflable, soit d'une pièce rigide subissant un déplacement sous l'action d'un moteur ou d'un piston à huile ou à gaz, ou encore d'un alliage à mémoire de forme.

L'on peut aussi imaginer que le poussoir interne 15 et la peau externe 13 sont montés directement sur les pièces environnantes (caisson 3 ou carrosserie fixe 1), donc sans l'intermédiaire du support de fixation 17, dans une autre variante de l'invention.

Une deuxième mode de réalisation selon l'invention est illustré sur la figure 2, où le poussoir interne 35, toujours enveloppé par la peau externe 33, peut se déplacer en translation et en rotation par rapport au support de fixation 37 grâce à une liaison pivot-vérin située entre les deux composants de l'élément de carrosserie 31. Cette configuration permet de donner une plus grande liberté de mouvement au poussoir interne 35 afin d'imposer à la peau externe 33 une conformation plus complexe et protubérante, que la rotation simple du poussoir interne 35 ne peut pas atteindre, dans le cas du premier mode de réalisation de la figure 1.

Dans ce deuxième mode de réalisation, le support de fixation 37 est toujours fixé au caisson 3 du hayon du véhicule. La peau externe 33, formant la partie visible de l'élément de carrosserie, est attachée d'un côté directement au caisson 3 et de l'autre côté à une extrémité du support de fixation 37, par des attaches de la peau 41, de façon à former une espace interne dans lequel le poussoir interne 35 peut se loger et se déplacer d'une première position, dans laquelle le poussoir interne 35 impose à la peau externe 33 une première conformation dite rétractée, dans laquelle il ne se trouve pas en saillie du reste de la carrosserie du véhicule (trait continu), à une seconde position dans laquelle le poussoir interne 35 impose à la peau externe 33 une seconde conformation dite étendue (trait interrompu). Les conformations respectives sont décrites ci-dessus dans le premier mode de réalisation.

Plus particulièrement, le poussoir interne 35 est monté sur le support de fixation 37 par l'intermédiaire d'un vérin 38 qui fournit l'actionnement en translation au poussoir interne 35. Le vérin 38 est monté sur le support de fixation 37 par une liaison pivot. Grâce à cette liaison pivot, le vérin 38 peut tourner autour d'un axe de rotation 39a par rapport au support de fixation 37, de la première position à la seconde position, de façon à conformer la peau externe 33. Le poussoir interne 35 est alors fixé à une extrémité du vérin 38, de préférence par une autre liaison pivot qui permet au poussoir interne 35 de tourner autour de l'extrémité du vérin 38 selon un axe de rotation 39b. Dans ce cas, le poussoir interne 35 peut tourner autour du support de fixation 37 et en même temps se déplacer en translation par rapport au support de fixation 37. Autrement dit, le poussoir interne 35 tourne selon l'axe 39a avec un rayon variable. Une combinaison des mouvements en rotation et en translation présente l'avantage d'obtenir une forme aérodynamique plus complexe et protubérante par rapport au premier mode de réalisation de la figure 1, à condition que le volume de l'élément de carrosserie 31 en position rétractée soit le même ou encore plus petit que celui de l'élément de carrosserie 11 en position rétractée du premier mode de réalisation. Ceci permet d'économiser l'encombrement de l'élément de carrosserie selon l'invention, ce qui peut permettre notamment de le monter sur des véhicules de grande série assujettis à l'homologation.

On notera que la peau externe 33 est renforcée, comme le premier mode de réalisation, dans les zones de contact avec le support de fixation 37, le poussoir interne 35 et le caisson 3, soit par des renforts rigides de la peau 43, soit par une épaisseur locale plus importante par rapport aux autre parties extensibles de la peau.

Un troisième mode de réalisation selon l'invention est illustré sur la figure 3, où un poussoir interne 55 peut se déplacer en translation par rapport à un support de fixation 57 grâce à un vérin 58 situé entre les deux composants d'un élément de carrosserie 51. Cette configuration permet de donner une liberté de mouvement en translation au poussoir interne 55, afin d'imposer à une peau externe 53, derrière laquelle ledit poussoir interne 55 est caché, des conformations qui correspondent respectivement à l'ouverture et la fermeture du hayon, en la repoussant vers l'extérieur de l'enveloppe du véhicule, dans une position non aérodynamique qui permet l'ouverture du hayon, et en la ramenant vers sa position initiale en retrait, dans laquelle elle ne se trouve pas en saillie du reste de la carrosserie du véhicule et assure une meilleure trainée aérodynamique du véhicule. Un avantage de ce mode de réalisation est d'éviter tout risque de pincement entre les parties rigides du hayon et du reste de la carrosserie fixe.

Dans ce troisième mode de réalisation, le support de fixation 57 est fixé à la caisse fixe 1 du véhicule (et non sur le hayon comme dans les modes de réalisation précédents). La peau externe 53, formant la partie visible de l'élément de carrosserie 51, est attachée seulement par une de ses extrémité à la carrosserie fixe 1, par des attaches 61, de façon à donner au reste de la peau externe 53 une liberté de mouvement par flexion autour de ses attaches 61. Ainsi, le poussoir interne 55 peut se déplacer d'une première position, dans laquelle le poussoir interne 55 impose à la peau externe 53 une première conformation dite rétractée (trait continu), favorable à un bon comportement aérodynamique du véhicule, à une seconde position dans laquelle le poussoir interne 55 impose à la peau externe 53 une seconde conformation dite étendue (trait interrompu) qui permet l'ouverture du hayon.

Plus particulièrement, dans ce mode de réalisation, la peau externe 53 est renforcée dans sa majeure partie, c'est-à-dire partout sauf à la jonction 65 entre sa partie fixée par les attaches 61 et sa partie visible de l'extérieur du véhicule, soit par des renforts rigides de la peau 63, soit par une épaisseur locale plus importante par rapport aux autre parties extensibles de la peau. Ainsi, seule la partie 65 intermédiaire de la peau externe 53 entre les attaches 61 et la partie renforcée 63 est déformable, et grâce à cette partie déformable, la peau externe 53 est apte à être repoussée et rétractée entre la première position et la seconde position, sous l'action du poussoir interne 55. La déformation de la partie 65 évite tout risque de pincement avec des parties rigides du hayon et du reste de la caisse du véhicule. A cet effet, de préférence, la peau externe 53 est tendue dans ces deux conformations, de manière à ne jamais présenter aucun pli.

L'invention n'est pas limitée aux modes de réalisation présentés et d'autres modes de réalisation apparaîtront clairement à l'homme du métier.

Ainsi, dans un mode de réalisation non représenté, la peau externe de l'élément de carrosserie peut encore subir un traitement lui donnant un aspect visuellement acceptable pour l'industrie automobile et capable de résister aux agressions environnementales extérieures, grâce à ses propriétés de matière.

Dans d'autres modes de réalisations non représentés, l'élément de carrosserie est placé directement contre le bord d'une vitre arrière du véhicule, cette vitre étant déplaçable avec un ouvrant arrière du véhicule, l'élément de carrosserie se retrouvant ainsi :
- soit dans le prolongement du toit ;
- soit sur les montants latéraux d'un hayon ;
- soit sur une malle.

Dans un autre mode de réalisation, non représenté, la peau externe de l'élément de carrosserie est intégrée à une zone de crosse de pare-chocs arrière. Avantageusement la peau externe est obtenue de surmoulage ou de comoulage avec une peau de pare-chocs en résine polypropylène.

Dans encore un autre mode de réalisation, non représenté, l'élément de carrosserie est situé autour des passages de roues, d'une partie arrière supérieure du toit, telle que la zone de becquet ou spoiler, ou dans les pare-chocs avant ou les bas de caisse.

Dans encore un autre mode de réalisation, non représenté, l'élément de carrosserie comprend des moyens d'actionnement du poussoir interne déclenchant son passage d'une configuration à l'autre à partir d'une vitesse donnée, fournie par le capteur de vitesse du véhicule, par exemple 80 km/h.

Dans encore un autre mode de réalisation, non représenté, l'élément de carrosserie comprend des moyens d'actionnement du poussoir interne déclenchant son passage d'une configuration à l'autre à partir d'une pression donnée, fournie par un capteur de pression situé à l'arrière du véhicule.

De façon générale, l'invention concerne tout élément de carrosserie consistant en une peau externe extensible et un poussoir interne rigide, et ce, quels que soient leur nombre et leur configuration. En particulier, on peut combiner plusieurs poussoirs internes à une seule peau externe ou encore à plusieurs peaux externes.

## Revendications

1. Élément de carrosserie (11 ; 31 ; 51) d'un véhicule automobile, destiné à être placé à l'arrière de ce véhicule, ledit élément comportant une partie visible de l'extérieur du véhicule, ledit élément comprenant une peau externe (13 ; 33 ; 53) partiellement ou totalement extensible et un poussoir interne (15 ; 35 ; 55) situé derrière cette peau, apte à prendre une première configuration dans laquelle le poussoir interne (15 ; 35 ; 55) impose à la peau externe (13 ; 33 ; 53) une première conformation et une seconde configuration dans laquelle le poussoir interne (15 ; 35 ; 55) impose à la peau externe (13 ; 33 ; 53) une seconde conformation, la peau externe (13 ; 33 ; 53) étant tendue dans ces deux conformations, de manière à ne jamais présenter aucun pli, **caractérisé :**
- **en ce que** la peau externe (13 ; 33 ; 53) est en une matière déformable apte à s'étirer d'au moins 100% telle que le TPU, le caoutchouc, le SEBS,
- et **en ce que**, dans l'une seulement des deux conformations, la peau externe (13 ; 33 ; 53) présente une partie en saillie du reste de la carrosserie du véhicule.

2. Élément de carrosserie selon la revendication 1, dans lequel la peau externe (13 ; 33 ; 53) est en une matière déformable apte à s'étirer de plus 200%.

3. Élément de carrosserie selon l'une quelconque des revendications précédentes, dans lequel le poussoir interne est une vessie gonflable.

4. Élément de carrosserie selon l'une quelconque des revendications 1 et 2, dans lequel le poussoir interne est réalisé en un alliage à mémoire de forme.

5. Élément de carrosserie selon l'une quelconque des revendications 1 et 2, dans lequel le poussoir interne (15 ; 35 ; 55) est une pièce rigide déplaçable sous l'action d'un organe moteur électrique ou hydraulique ou à gaz.

6. Élément de carrosserie selon l'une quelconque des revendications précédentes, dans lequel la peau externe (13 ; 33 ; 53) a subi un traitement lui donnant un aspect visuellement acceptable pour l'industrie automobile et capable de résister aux agressions environnementales extérieures.

7. Élément de carrosserie selon l'une quelconque des revendications précédentes, comprenant un support de fixation (17 ; 37 ; 57) à une partie du véhicule, telle que carrosserie fixe (1) ou caisson de hayon (3).

8. Élément de carrosserie selon l'une quelconque des revendications précédentes, placé au bord d'une vitre arrière (7) du véhicule, cette vitre (7) étant déplaçable avec un ouvrant arrière du véhicule, l'élément de carrosserie se retrouvant ainsi :
- soit dans le prolongement du toit ;
- soit sur les montants latéraux d'un hayon ;
- soit sur une malle.

9. Élément de carrosserie selon l'une quelconque des revendications précédentes, intégré à une zone de crosse de pare-chocs arrière du véhicule.

10. Élément de carrosserie selon l'une quelconque des revendications précédentes, placé autour des passages de roue arrière du véhicule.

11. Élément de carrosserie selon l'une quelconque des revendications précédentes, comprenant des moyens d'actionnement du poussoir interne déclenchant son passage d'une configuration à l'autre à partir d'une vitesse donnée, fournie par un capteur de vitesse du véhicule, par exemple 80 km/h.

12. Élément de carrosserie selon l'une quelconque des revendications précédentes, comprenant des moyens d'actionnement du poussoir interne déclenchant son passage d'une configuration à l'autre à partir d'une pression donnée, fournie par un capteur de pression situé à l'arrière du véhicule.

13. Élément de carrosserie selon l'une quelconque des revendications précédentes, dans lequel la partie de la peau externe (13 ; 33) en saillie du reste de la carrosserie dans une des configurations est apte à dévier les flux d'air pour réduire la trainée à l'arrière du véhicule.

14. Élément de carrosserie selon l'une quelconque des revendications 1 à 12, dans lequel la peau externe (53) réduit la trainée à l'arrière du véhicule dans une première configuration, tout en faisant obstacle à l'ouverture du hayon, tandis qu'elle permet l'ouverture du hayon dans une seconde configuration.

## Patentansprüche

1. Karosserieelement (11; 31; 51) eines Kraftfahrzeugs, das dazu bestimmt ist, am Heck dieses Fahrzeugs platziert zu werden, wobei das Karosserieelement einen von außerhalb des Fahrzeugs sichtbaren Teil aufweist, wobei das Element eine Außenhaut (13; 33; 53) umfasst, die zum Teil oder zur Gänze dehnbar ist, und ein inneres Schubelements (15; 35; 55) umfasst, das hinter dieser Haut gelegen ist und einen ersten Zustand einnehmen kann, in dem das innere Schubelement (15; 35; 55) der Außenhaut (13; 33; 53) eine erste Formgebung vorgibt, und einen zweiten Zustand einnehmen kann, in dem das innere Schubelement (15; 35; 55) der Außenhaut (13; 33; 53) eine zweite Formgebung vorgibt, wobei die Außenhaut (13; 33; 53) in diesen zwei Formgebungen so gespannt ist, dass sie zu keiner Zeit eine Falte aufweist, **dadurch gekennzeichnet,**
**dass** die Außenhaut (13; 33; 53) aus einem verformbaren Material ist, das zu mindestens 100 % dehnbar ist, wie TPU, Gummi, SEBS,
und **dass** nur in der einen der zwei Formgebungen die Außenhaut (13; 33; 53) einen Teil aufweist, der über die übrige Karosserie des Fahrzeugs übersteht.

2. Karosserieelement nach Anspruch 1, wobei die Außenhaut (13; 33; 53) aus einem verformbaren Material ist, das zu mehr als 200 % dehnbar ist.

3. Karosserieelement nach einem der vorhergehenden Ansprüche, wobei das innere Schubelement ein aufblasbarer Balg ist.

4. Karosserieelement nach einem der Ansprüche 1 und 2, wobei das innere Schubelement aus einer Formgedächtnislegierung ist.

5. Karosserieelement nach einem der Ansprüche 1 und 2, wobei das innere Schubelement (15; 35; 55) ein starres Teil ist, das unter der Einwirkung eines Elektro-, Hydraulik- oder Gasmotororgans bewegbar ist.

6. Karosserieelement nach einem der vorhergehenden Ansprüche, wobei die Außenhaut (13; 33; 53) einer Behandlung unterzogen wurde, die ihr ein für die Kraftfahrzeugindustrie visuell akzeptables Aussehen verleiht und gegenüber den äußeren Umwelteinflüssen widerstandsfähig ist.

7. Karosserieelement nach einem der vorhergehenden Ansprüche, umfassend eine Halterung zur Befestigung (17; 37; 57) an einem Teil des Fahrzeugs, wie feste Karosserie (1) oder Heckklappenraum (3).

8. Karosserieelement nach einem der vorhergehenden Ansprüche, das am Rand einer Heckscheibe (7) des Fahrzeugs platziert ist, wobei diese Scheibe (7) mit einem hinteren beweglichen Karosserieteil des Fahrzeugs bewegbar ist, wobei sich das Karosserieelement somit:
entweder in der Verlängerung des Dachs;
oder an den seitlichen Holmen einer Heckklappe;
oder an einem Kofferraum befindet.

9. Karosserieelement nach einem der vorhergehenden Ansprüche, das in eine Traversenzone eines hinteren Stoßfängers des Fahrzeugs integriert ist.

10. Karosserieelement nach einem der vorhergehenden Ansprüche, das um die hinteren Radkästen des Fahrzeugs herum platziert ist.

11. Karosserieelement nach einem der vorhergehenden Ansprüche, umfassend Mittel zur Betätigung des inneren Schubelements, die dessen Übergang von einem Zustand in den anderen ab einer bestimmten Geschwindigkeit auslösen, die von einem Geschwindigkeitsgeber des Fahrzeugs bereitgestellt wird, zum Beispiel 80 km/h.

12. Karosserieelement nach einem der vorhergehenden Ansprüche, umfassend Mittel zur Betätigung des inneren Schubelements, die dessen Übergang von einem Zustand in den anderen ab einem bestimmten Druck auslösen, der von einem Druckgeber des Fahrzeugs bereitgestellt wird, der am Heck des Fahrzeugs gelegen ist.

13. Karosserieelement nach einem der vorhergehenden Ansprüche, wobei der Teil der Außenhaut (13; 33), der über die übrige Karosserie in einem der Zustände übersteht, in der Lage ist, die Luftströme umzuleiten, um den Luftwiderstand am Heck des Fahrzeugs zu reduzieren.

14. Karosserieelement nach einem der Ansprüche 1 bis 12, wobei die Außenhaut (53) den Luftwiderstand am Heck des Fahrzeugs in einem ersten Zustand reduziert und gleichzeitig dem Öffnen der Heckklappe entgegenwirkt, während sie das Öffnen der Heckklappe in einem zweiten Zustand gestattet.

## Claims

1. Bodywork element (11; 31; 51) for motor vehicle, intended to be placed at the rear of this vehicle, said element comprising a part visible from the outside of the vehicle, said element comprising a partially or totally extensible outer skin (13; 33; 53) and an inner tappet (15; 35; 55) located behind this skin, adapted to take a first configuration in which the inner tappet (15; 35; 55) imposes on the outer skin (13; 33; 53) a first conformation and a second configuration in which the inner tappet (15; 35; 55) imposes on the outer skin (13; 33; 53) a second conformation, the outer skin (13; 33; 53) being stretched in these two conformations, so as never to present any fold, **characterised:**
- **in that** the outer skin (13; 33; 53) is made of a deformable material adapted to stretch by at least 100% such as TPU, rubber, SEBS,
- and **in that**, in only one of the two conformations, the outer skin (13; 33; 53) has a part projecting from the rest of the vehicle bodywork.

2. Bodywork element according to claim 1, wherein the outer skin (13; 33; 53) is made of a deformable material adapted to stretch by over 200%.

3. Bodywork element according to any one of the preceding claims, wherein the inner tappet is an inflatable bladder.

4. Bodywork element according to claim 1 or 2, wherein the inner tappet is made of a shape memory alloy.

5. Bodywork element according to claim 1 or 2, wherein the inner tappet (15; 35; 55) is a rigid part that can be moved under the action of an electric or hydraulic or gas motor member.

6. Bodywork element according to any one of the preceding claims, wherein the outer skin (13; 33; 53) has undergone treatment giving it an appearance that is visually acceptable for the automotive industry and capable of withstanding the exterior environmental attacks.

7. Bodywork element according to any one of the preceding claims, comprising a support (17; 37; 57) for attachment to a part of the vehicle, such as fixed bodywork (1) or tailgate inner panel (3).

8. Bodywork element according to any one of the preceding claims, placed on the edge of a rear window (7) of the vehicle, this window (7) being able to move with a rear opening leaf of the vehicle, the bodywork element being thus:
- either in the extension of the roof;
- or on the side posts of a tailgate;
- or on a boot.

9. Bodywork element according to any one of the preceding claims, integrated in an area of the vehicle rear bumper corner end cap.

10. Bodywork element according to any one of the preceding claims, placed around the vehicle rear wheel arches.

11. Bodywork element according to any one of the preceding claims, comprising means to actuate the inner tappet triggering its transition from one configuration to the other above a given speed, supplied by a speed sensor of the vehicle, for example 80 km/h.

12. Bodywork element according to any one of the preceding claims, comprising means to actuate the inner tappet triggering its transition from one configuration to the other above a given pressure, supplied by a pressure sensor located at the rear of the vehicle.

13. Bodywork element according to any of the preceding claims, wherein the part of the outer skin (13; 33) projecting from the rest of the bodywork in one of the configurations is adapted to deflect the air flows to reduce the drag at the rear of the vehicle.

14. Bodywork element according to any one of claims 1 to 12, wherein the outer skin (53) reduces the drag at the rear of the vehicle in a first configuration and prevents the tailgate from being opened, whereas it allows the tailgate to be opened in a second configuration.
